# EUROPEAN PATENT APPLICATION

(11) **EP 4 738 070 A1**
(43) Date of publication of application: **06.05.2026**
(21) Application number: 24306851.7
(22) Date of filing: 04.11.2024
(51) Int. Cl.: G06F 3/01, A63F 13/285, H04N 21/235, H04N 21/236, H04N 21/435, H04N 21/84, H04N 21/845, H04N 21/85

(54) **METHOD AND APPARATUS FOR ADVANCED ENCODING OF PARAMETRIC HAPTIC DATA**

(71) Applicant: InterDigital CE Patent Holdings, SAS, 75017 Paris (FR)
(72) Inventor: GALVANE, Quentin, 35235 THORIGNE-FOUILLARD (FR); ARGELAGUET SANZ, Ferran, 35520 LA CHAPELLE DES FOUGERETZ (FR); GUILLOTEL, Philippe, 35770 VERN SUR SEICHE (FR); LECUYER, Gurvan, 35000 RENNES (FR)
(74) Representative: Vossius & Partner Patentanwälte Rechtsanwälte mbB

(57) **Abstract**

A system, codec and method for encoding parametric haptic data are disclosed. This includes providing a property designating an effect of a parametric model including a type of signal, providing in the effect of a parametric model a designation of a symmetry of the signal, indicating properties in the parametric model to define a pulse including pulse width and interphase delay and providing properties in a plurality of haptic effect patterns including effect type, number of pulses, cycle offset, and number of cycles. The property may be monopolar or bipolar. The designation may be symmetric or asymmetric. The interphase delay may indicate symmetric or asymmetric. The effect type may indicate the pattern via a set of keyframes. The number of pulses may indicate pulses in one primitive. The cycle offset may indicate a time between two cycles. The number of cycles may indicate cycles in the pattern effect.

## Description

### BACKGROUND

Existing haptic formats currently offer a limited set of parameters to represent basic haptic signals. These parametric representations (e.g., MPEG-I Haptic format) generally are defined to allow the encoding, decoding and rendering of vibrotactile data (the most widely used type of haptic data). For this reason, the parametric representation of these formats is simplistic and lack the necessary information to encode more advanced haptic signals. A good example resides in the encoding of electrotactile data. The set of parameters in existing formats (typically the MPEG format), is not sufficient to easily encode this type of data.

### SUMMARY

A system, codec and method for encoding parametric haptic data are disclosed. The method includes providing a property designating an effect of a parametric model including a type of signal, providing in the effect of a parametric model a designation of a symmetry of the signal, indicating properties in the parametric model to define a pulse including pulse width and interphase delay and providing properties in a plurality of haptic effect patterns including effect type, number of pulses, cycle offset, and number of cycles. The property may be monopolar or bipolar. The designation of the symmetry may be symmetric or asymmetric. The interphase delay may indicate if the signal is symmetric or asymmetric. The effect type may include a value indicating the pattern via a set of keyframes for one cycle that repeats. The number of pulses may indicate the number of pulses in one primitive. The cycle offset may indicate a time between two cycles. The number of cycles may indicate the number of cycles in the pattern effect.

The codec for encoding parametric haptic data includes a haptic synthesizer configured to provide a property designating an effect of a parametric model including a type of signal, provide in the effect of a parametric model a designation of a symmetry of the signal, indicate properties in the parametric model to define a pulse including pulse width and interphase delay and provide properties in a plurality of haptic effect patterns including effect type, number of pulses, cycle offset, and number of cycles. The property may be monopolar or bipolar. The designation of the symmetry may be symmetric or asymmetric. The interphase delay may indicate if the signal is symmetric or asymmetric. The effect type may include a value indicating the pattern via a set of keyframes for one cycle that repeats. The number of pulses may indicate the number of pulses in one primitive. The cycle offset may indicate a time between two cycles. The number of cycles may indicate the number of cycles in the pattern effect.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1 illustrates a moving picture experts group (MPEG) haptics data structure;
FIG. 2 illustrates a haptic signal (bottom) and the decomposition in two frequency bands (top);
FIG. 3 illustrates an example of haptic data stored on two channels;
FIG. 4 illustrates a haptic encoder architecture according to embodiments of the present invention;
FIG. 5A illustrates an example electro stimulation monopolar pulse;
FIG. 5B illustrates an example electro stimulation monopolar square wave pulse;
FIG. 5C illustrates an example electro stimulation symmetric bipolar pulse;
FIG. 5D illustrates an example electro stimulation symmetric bipolar square wave pulse;
FIG. 5E illustrates an example electro stimulation symmetric bipolar pulse with interphase delay;
FIG. 5F illustrates an example electro stimulation asymmetric bipolar pulse;
FIG. 5G illustrates an example electro stimulation balanced asymmetric bipolar pulse;
FIG. 6 illustrates an example of structured haptic signal; and
FIG. 7 illustrates an example signal defined with a haptic pattern containing three cycles of three pulses.

### DETAILED DESCRIPTION

Existing haptic formats currently offer a limited set of parameters to represent basic haptic signals. These parametric representations (e.g. MPEG-I Haptic format) generally are defined to allow the encoding, decoding and rendering of vibrotactile data (the most widely used type of haptic data). For this reason, the parametric representation of these formats is simplistic and lack the necessary information to encode more advanced haptic signals. A good example resides in the encoding of electrotactile data. The set of parameters in existing formats (typically the MPEG format), is not sufficient to easily encode this type of data.

With the on-going moving picture experts group (MPEG)standardization process on the coded representation of haptics, a new haptic coding format is being defined. The reference model of this format coding format and the encoder are described below.

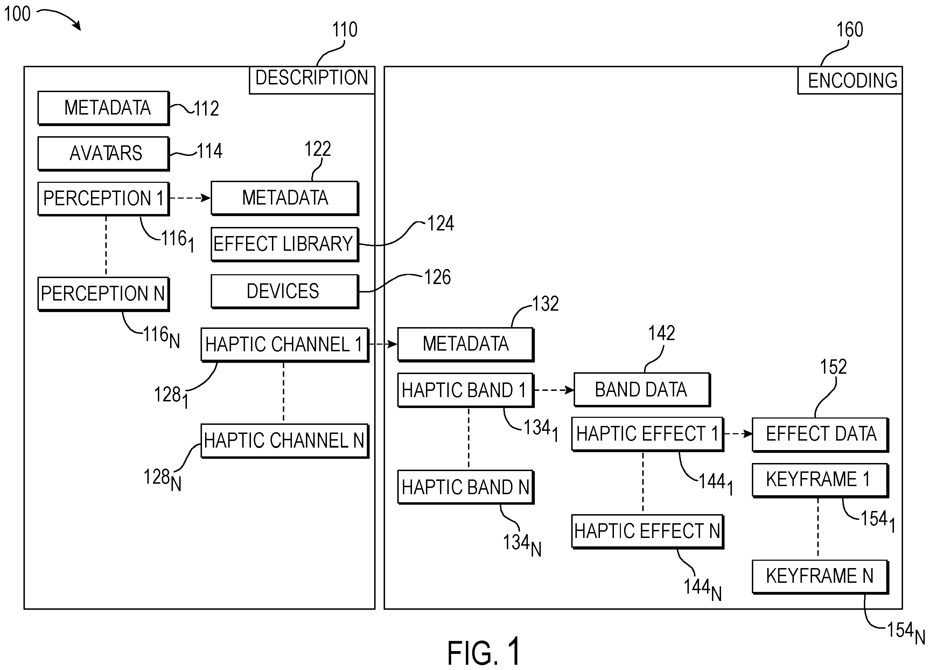

FIG. 1 illustrates a moving picture experts group (MPEG) haptics data structure 100. Data structure 100 of the format follows a hierarchical organization as illustrated in FIG. 1. The file format is divided into a first portion identified as description 110 and a second portion identified as encoding 160. The format first contains some high-level metadata information regarding the overall haptic experience defined in the file. It then provides a list of avatars (i.e., body representation) later referenced in the file to specify the desired location of haptic stimuli on the body. Generally, description 110 includes the haptic information described in metadata and encoding 160 includes the haptic information in the data itself. Within description 110 data structure 100 includes high-level metadata information 112 regarding the overall haptic experience defined in the file. Data structure 100 provides a list of avatars 114 (i.e., body representation) later referenced in the file to specify the desired location of haptic stimuli on the body. The haptic data within the data structure 100 is described through a plurality of perceptions 116 (individually identified as perceptions 116₁ through 116_{N} collectively referred to as plurality of perceptions 116). Plurality of perceptions 116 each correspond to haptic signals associated with specific perception modalities (I.e., vibration, force, position, velocity, temperature, electrotactile, ...). A perception contains a list of channels where the data is decomposed in frequency bands.

Each perception in the plurality of perceptions 116 includes metadata 122, an effect library 124, devices 126, and a plurality of haptic channels 128 (individually identified as haptic channels 128₁ through 128_{N} collectively referred to as plurality of haptic channels 128). Within plurality of haptic channels 128, the data is decomposed in frequency haptic bands 134 (individually identified as haptic bands 134₁ through 134_{N} collectively referred to as haptic bands 134) and metadata 132. Each haptic band 134 defines part of the signal in a given frequency range. The haptic band 134 includes band data 142 and a plurality of haptic effects 144 (individually identified as haptic effects 144₁ through 144_{N} collectively referred to as plurality of haptic effects 144). The band itself is described with a list of haptic effects each defining the haptic signal for a given time duration. The haptic signal in a track can then be reconstructed by combining the data in the different bands. Each haptic effect 144 includes effect data 152 and a plurality of keyframes 154 (individually identified as keyframes 154₁ through 154_{N} collectively referred to as plurality of keyframes 154). The haptic signal in a track can then be reconstructed by combining the data in the different bands.

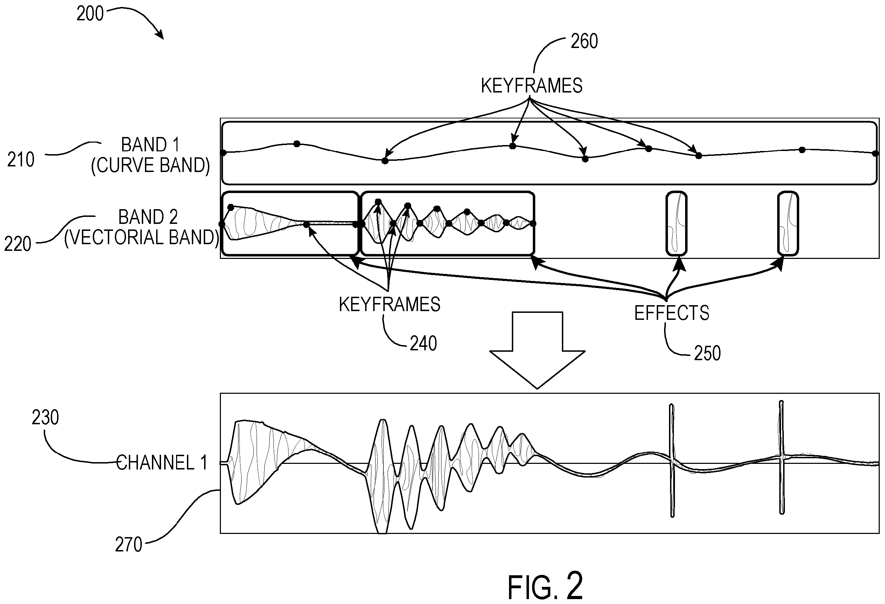

FIG. 2 illustrates a depiction 200 of a haptic signal 270 and the decomposition in two frequency bands 210, 220. Specifically, FIG. 2 illustrates how a haptic signal 270 is decomposed in two frequency bands (Band 1 210 and Band 2 220). As illustrated, band 1 210 is a low frequency band and band 2 220 is a high frequency band. By adding the high frequency band of band 2 220 and low frequency band of band 1 210, the original signal on channel 1 230 can be reconstructed in haptic signal 270 on channel 1 230.

Four types of haptic bands may be used including transient bands, curve bands, vectorial wave bands and wavelet bands. Each band (illustrated as band 1 210 and band 2 220) is composed of a series of "effects" 250 that are each defined by a list of "keyframes" 240, 260. The data contained in effects 250 and keyframes 240, 260 is interpreted differently for different types of haptic bands and encoding modalities.

Specifically, in FIG. 2, band 1 210 is a curve band that includes keyframes 260 within the low frequency curve of the curve band. Each effect stores a set of keyframes 260 defining a position and an amplitude. Keyframes 260 represent the control points of the curve of band 1 210.

Band 2 220 is a vectorial band that includes a series of higher frequency signals using frequency modulation envelops. Band 2 220 includes keyframes 240 and effects 250. Each effect 250 respectively stores a set of keyframes 240 defining a position, an amplitude and a frequency. Each effect 250 stores the contents of one wavelet block binary stream.

In an example, for a transient band, each effect may store a set of keyframes defining a position, an amplitude, and a frequency. A keyframe represents a transient event in such a configuration.

In a curve band, for example, each effect stores a set of keyframes defining a position and an amplitude. The keyframes represent the control points of the curve. The type of interpolation function (i.e., cubic or linear) used to generate the band may be specified in the metadata of the band.

For vectorial wave bands, for example, the effect stores a set of keyframes defining a position, an amplitude and a frequency. For wavelet bands, for example, the effect stores the contents of one wavelet block binary stream.

The list of properties defining a haptic effect is detailed in Table 1. The signal of an effect is defined through a list of keyframes or a wavelet stream depending on the band type as well as the position (temporal or spatial) and potentially a phase and the waveform of the base signal.

**Table 1: Haptic effect properties**

| **Prope rty** | **Description** |
|---|---|
| **Id** | Unique ID of the effect. This property is required for effects defined at the perception level in the library and for reference effects. For reference effects, this property corresponds to the ID of the library effect being referenced. The ID is unique among all effect IDs in this haptic experience. |
| **Effect type** | Type of haptic effect. Possible values are: |
| | - Basis: Effect containing signal data defined through a set of keyframes. |
| | - Composite: Effect composed of a set of other effects defined in the composition property. This type of effect does not directly contain keyframes. |
| | - Reference: Effect referencing an effect in the library. This type of effect is used at the band level to reference effects defined at the perception level in the effect library using a unique ID. |
| **Sema ntic keyw ords** | Semantic keywords of the haptic effect. It is an optional field that may be added to an effect. |
| **Positi on** | Indicates the temporal or spatial position of the effect. The value 0 corresponds to the starting position of the experience. The default unit for temporal haptic feedback will be milliseconds while it will be millimetres for spatial haptic feedback. Temporal or spatial is defined by the perception Modality. |
| **Phase** | Indicates the phase of the effect in radian in the range [0,2π]. This value is used only for vectorial wave bands and is ignored in effects stored inside a band of a different type. |
| **Base signal** | This property is only used for vectorial wave bands. It defines the type of waveform signal to be used by the synthesizer. Possible values are: |
| | - Sine |
| | - Square |
| | - Triangle |
| | - Sawtooth up |
| | - Sawtooth down |
| **comp ositio n** | This property can only be used with composite effects. It contains a sub-list of effects. |
| **keyfra mes** | List of keyframes as defined in Table 2. The keyframes list is only used for basis effects. |
| **Wavel et strea m** | Encoded wavelet stream. |

Finally, the list of properties of a keyframe is detailed in Table 2. Keyframes are used only for transient, curve and vectorial bands.

**Table 2: List of properties of a keyframe**

| **Property** | **Description** |
|---|---|
| **amplitude modulation** | Amplitude of the keyframe. For vibrotactile signals, a negative vibration refers to an opposite polarity of the modulated signal. |
| **Frequency modulation** | Relative frequency of the keyframe. |
| **Relative position** | Relative position of the keyframe. |

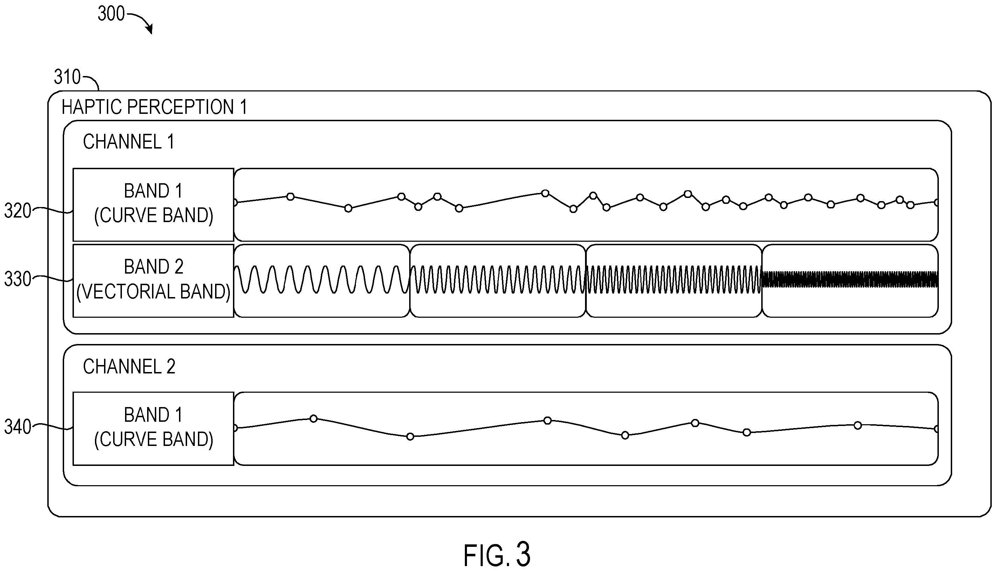

FIG. 3 illustrates an example 300 of haptic data stored on two channels. The haptic data represents a haptic perception 310. The first channel contains a curve band 320 signal and a vectorial band 330 signal. The second channel contains a single curve band 340. The first channel contains a curve band 320 signal with a single effect and a vectorial band 330 signal with four effects. The second channel contains a single curve band 340.

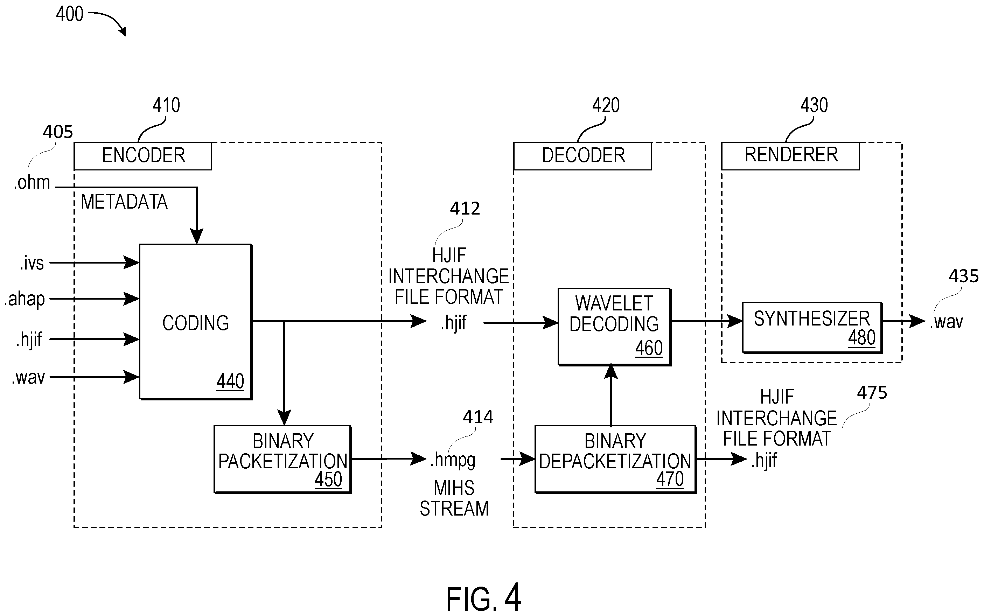

FIG. 4 illustrates a haptic codec architecture 400 according to embodiments of the present invention. The encoded signal may be exported either as a JSON (human readable) interchange format or as a compressed binary distribution format. Architecture 400 includes at a high level an encoder 410, decoder 420 and a renderer 430. Encoder 410 includes the coding 440 of inputs 405 for an output in an interchange file format 412, and as necessary the binary packetization 450 of the signal in a stream format 414. As is understood, the interchange file format 412 may include HJIF (.hjif) and the streaming format 414 may include an MIHS stream (.hmpg). The signals output from the encoder 410 are received in the decoder 420 where wavelet decoding 460 may be performed in the interchange file format 412 and binary depacketization 470 may be performed on the stream format 414. The binary depacketization 470 may then output an interchange file format 475 that may be in HJIF (.hjif), for example. The wavelet decoded 460 signal may be input to the renderer 430 utilizing a synthesizer 480 that provides an output 435. Output 435 from synthesizer 480 may take the form of a .wav file for example.

The encoding process may take an input 405 either descriptive haptics files (.IVS and .AHAP) or waveform PCM files (.wav). The encoding 440 of these two types of file formats follows two distinct approaches. For descriptive input files, the encoder 410 first analyzes the data and then transcodes the data directly to the MPEG format. For waveform signals, the data is processed using more common signal analysis methods to generate keyframes and either interpolate between keyframes or use wavelet coding (based on SPITH) to generate a binary encoded stream.

Two complementary formats based on this shared data model are defined in the MPEG standard specifications: an interchange format (.hjif), and a packetized compressed binary format for streaming that can also be stored in a binary file (.hmpg). The HJIF format is a human-readable format based on JSON and is not optimized for memory usage. It can easily be parsed and manually edited, which makes it an ideal interchange format, especially when designing or creating content. For distribution purposes, the .hjif data can be compressed and packetized into a more memory efficient binary .hmpg bitstream. This compression is lossy, with different parameters impacting the encoding depth of amplitudes and frequencies composing the bitstream. The compressed and packetized data can be directly distributed as a MPEG-I haptic stream (MIHS).

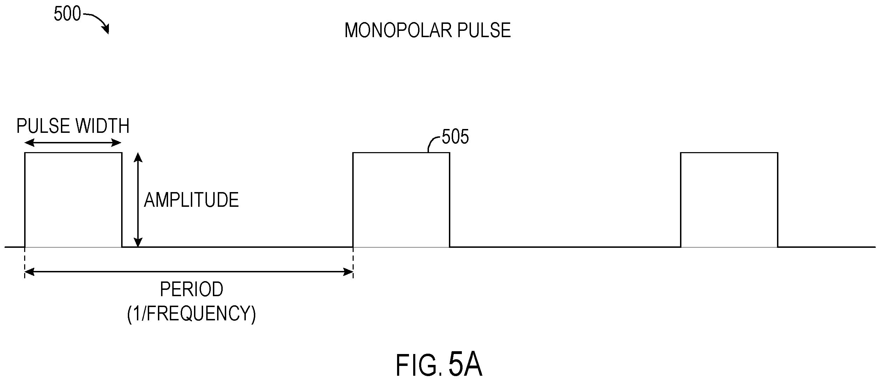

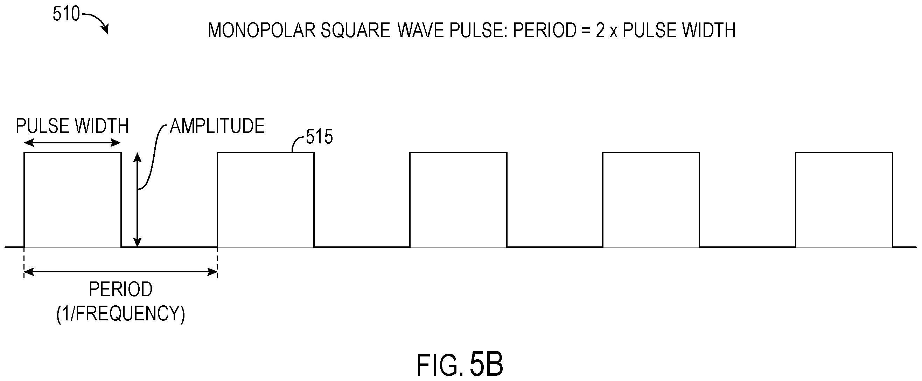

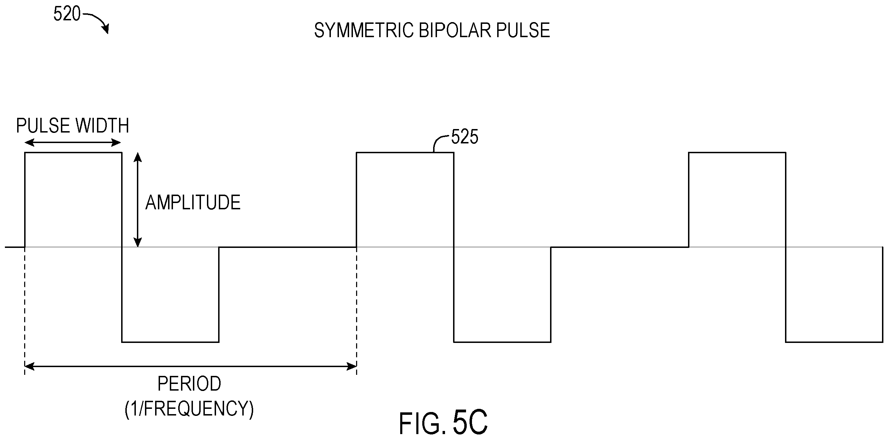

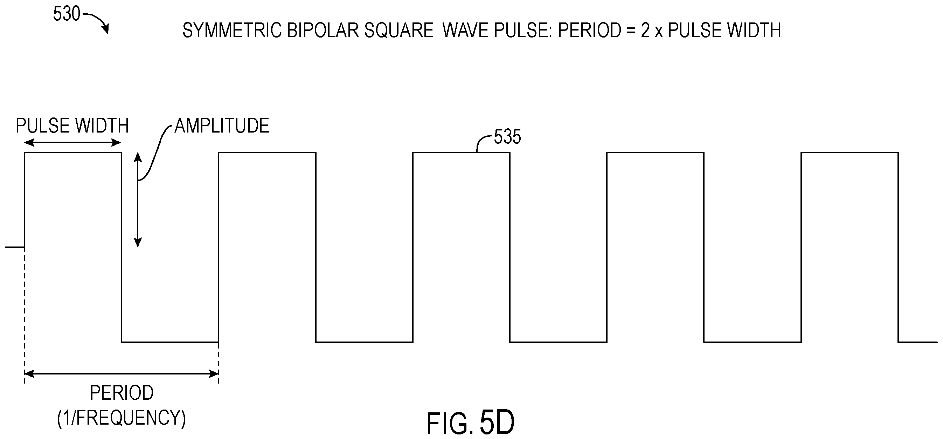

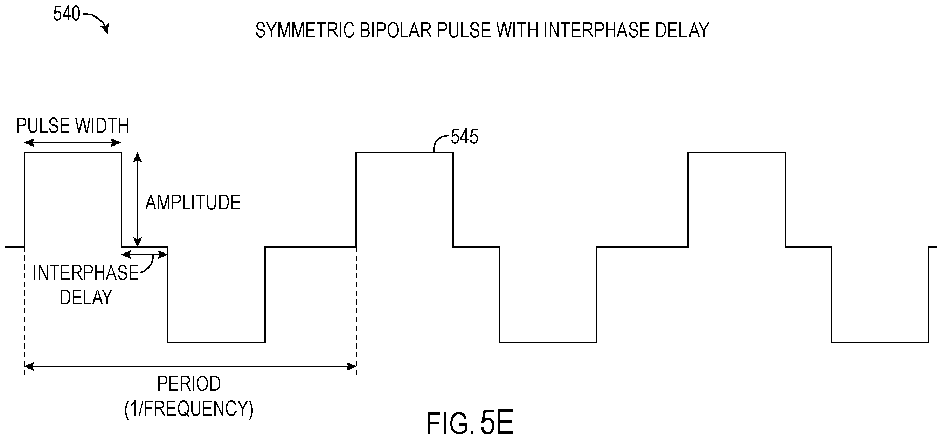

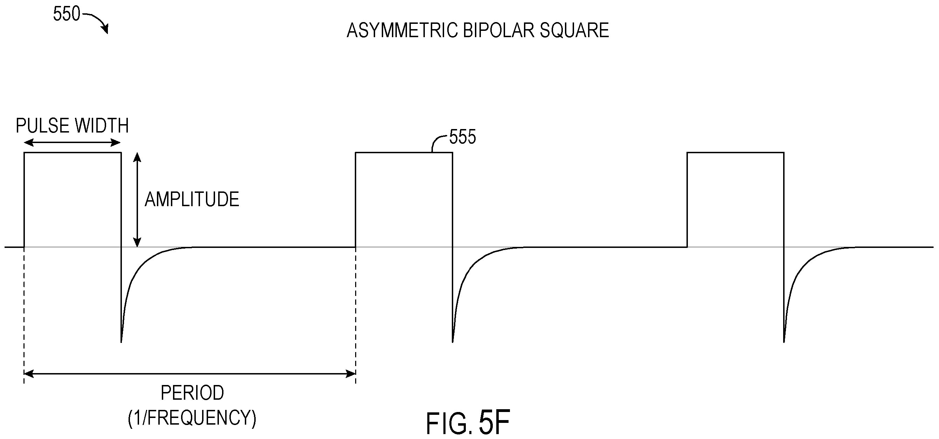

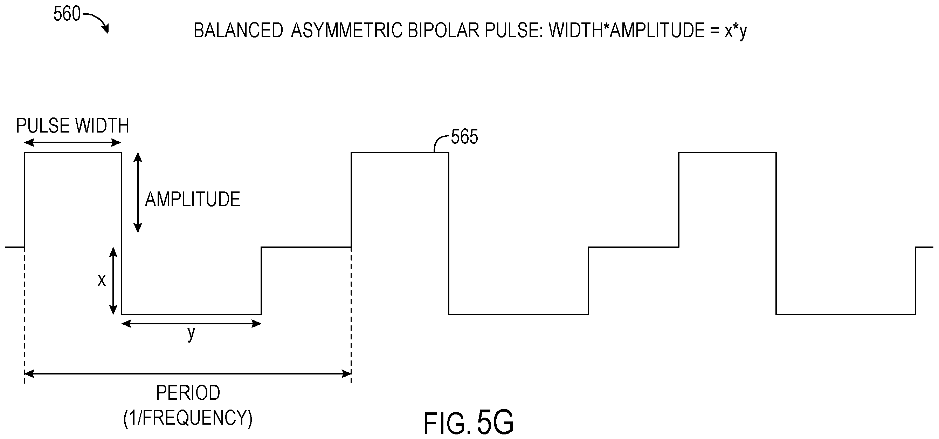

FIG. 5 collectively (FIGS. 5A-5G individually) illustrates example of pulses commonly used for electro stimulation. Electrotactile stimulation is one type of haptic feedback. While mostly used in medical environments (in physiotherapy for instance), more and more devices such as electrotactile gloves, or suits have been developed for the entertainment industry. These types of devices are typically used to simulate interactions with virtual environment to improve the sense of immersion. Signals used for electrotactile stimulation are based on pulses that may have many shapes and form. As illustrated in the collective FIG. 5 (including examples signals in FIGs. 5A-5G), the signals may be defined through a specific set of properties. These properties include the type of wave form (rectangle, square, monopolar, bipolar, symmetric, asymmetric ...), the pulse width, the frequency (or period) and the interphase delay.

FIG. 5A illustrates an example electro stimulation monopolar pulse 500. Monopolar pulse 500 includes a pulse 505 that has a defined amplitude and pulse width that occurs once every period.

FIG. 5B illustrates an example electro stimulation monopolar square wave pulse 510. Monopolar square wave pulse 510 includes a pulse 515 that has a defined amplitude and pulse width that occurs once every period where the period is defined to be 2 times the pulse width.

FIG. 5C illustrates an example electro stimulation symmetric bipolar pulse 520. Symmetric bipolar pulse 520 includes a pulse 525 that has a defined amplitude and pulse width. Symmetric bipolar pulse 520 includes an equal pulse to pulse 525 to make it symmetrical. The two pulses occur once every period.

FIG. 5D illustrates an example electro stimulation symmetric bipolar square wave pulse 530. Symmetric bipolar square wave pulse 530 includes a pulse 535 that has a defined amplitude and pulse width. Symmetric bipolar square wave pulse 530 includes an equal pulse to pulse 535 to make it symmetrical. The two pulses occur once every period where the period is defined to be 2 times the pulse width.

FIG. 5E illustrates an example electro stimulation symmetric bipolar pulse with interphase delay 540. Symmetric bipolar pulse with interphase delay 540 includes a pulse 545 that has a defined amplitude and pulse width. Symmetric bipolar pulse with interphase delay 540 includes an equal pulse to pulse 545 to make it symmetrical with an interphase delay between pulse 545 and its symmetrical pulse. The two pulses occur once every period.

FIG. 5F illustrates an example electro stimulation asymmetric bipolar pulse 550. asymmetric bipolar pulse 550 includes a pulse 555 that has a defined amplitude and pulse width. The pulse has an asymmetric pulse that has an asymptotic shape converging to zero. The two asymmetric pulses occur once every period.

FIG. 5G illustrates an example electro stimulation balanced asymmetric bipolar pulse 560. Balanced asymmetric bipolar pulse 560 includes a pulse 565 that has a defined amplitude and pulse width. Balanced asymmetric bipolar pulse 560 includes an asymmetrical to pulse 565 of a different amplitude and pulse width. The amplitude of the first pulse times the width of the first pulse is equal to the amplitude of the second pulse times the width of the second pulse. The two pulses occur once every period.

Existing haptic formats currently offer a limited set of parameters to represent basic haptic signals. These parametric representations (e.g. MPEG-I Haptic format) generally are defined to allow the encoding, decoding and rendering of vibrotactile data (the most widely used type of haptic data). For this reason, the parametric representation of these formats is simplistic and lack the necessary information to encode more advanced haptic signals. A good example resides in the encoding of electrotactile data. The set of parameters in existing formats (typically the MPEG format), is not sufficient to easily encode this type of data.

For instance, most of the signals depicted in FIGs. 5A-5G cannot be encoded with the parametric format proposed by MPEG. Indeed, only FIG. 5B and FIG. 5D may be encoded in vectorial bands. In this case, the output (monopolar or bipolar) depends on the synthesizer used to render the signal. The format only allows to define square wave signals where the pulse width is precisely half the period of the signal (with period = 1/frequency), and with no interphase delay.

Transient bands may be used but the duration of the transient is specifically set to one period in the synthesizer and one keyframe defines each pulse. Such an example may allow for encoding other signals of FIGs. 5A-5G, such as FIG. 5A and FIG. 5C. Such a configuration is generally extremely inefficient memory wise. For a signal with a 1kHz frequency, this implies that 1000 keyframes are stored for a one second signal. Curve bands may be used to encode this type of signal. It would provide complete freedom in terms of shape of the signal, but at least 5 keyframes are defined for each pulse.

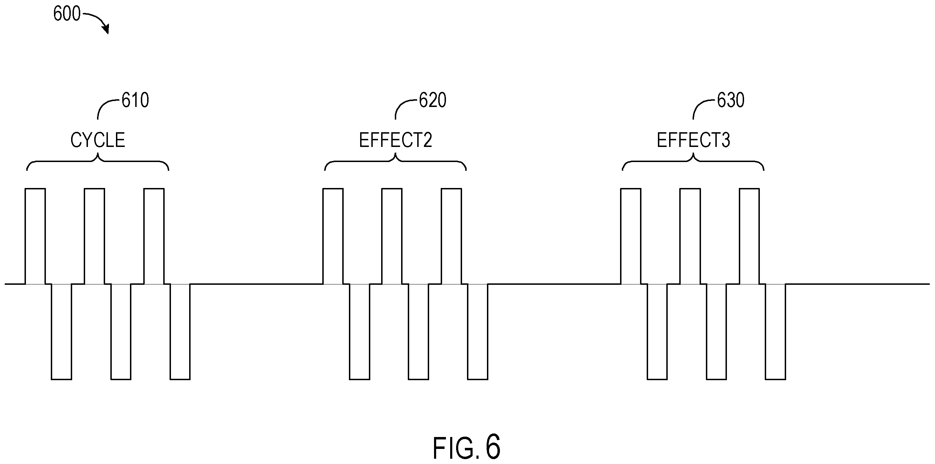

FIG. 6 illustrates an example of structured haptic signal 600. Common formats do not provide efficient ways to encode structured signals such as structured haptic signal 600. For instance,

FIG. 6 shows an example of electrotactile signal with repetitive burst of 3 pulses in symmetrical in a first cycle 610 and repeating a second effect in a second cycle 620, and a third effect in a third cycle 630. Current formats require the creation of a haptic effect containing the three bursts and then duplicate the effect to create the signal. This is inefficient both memory wise and from an authoring perspective. It requires to store or reference the effect for every iteration of the cycle and editing the signal may require changing every effect to modify the shape and the repetition frequency of the cycle.

As described herein, the parametric model is extended by MPEG in order to provide a solution supporting advanced haptic signal structures thereby reducing the memory footprint of complex signals and provides an efficient way for authoring and editing these signals. Additional parameters are defined for a haptic effect to explicitly indicates the type of pulse signals to render as illustrated in Table 3. With this approach, both monophasic and biphasic signals can be rendered, it is no longer dependent on the synthesizer.

**Table 3: List of new properties added to an effect in the parametric model**

| **Prope rty** | **Description** |
|---|---|
| **Mono polar** | This property is only used for vectorial wave bands. It indicates if the signal is monopolar (monophasic) or bipolar (biphasic). |
| **Sym metri c** | This property is only used for vectorial wave bands with bipolar effect. It indicates if the signal is symmetric or asymmetric. |

In addition, the model may be extended with the parameters detailed in Table 4. In conjunction with the already existing frequency modulation (period = 1/frequency) and amplitude modulation parameters stored in keyframes, these additional parameters define the characteristics of a pulse. The parameters may be added at the effect level (the property remains constant for the duration of the effect) or at the keyframe level. Adding at the keyframe level allows to modulate the value throughout the effect. With this approach, the signals presented in FIG. 5 with an interphase delay or with period greater than two pulse width may now be defined with a single keyframe. For a 1KHz signal frequency, this reduces the memory footprint by a factor of 1000.

**Table 4: List of new properties added to the parametric model to define the pulse**

| **Prope rty** | **Description** |
|---|---|
| **Pulse width** | This property is only used for vectorial wave bands. Width of the pulse |
| **Interp hase delay** | This property is only used for vectorial wave bands with bipolar effect. It indicates if the signal is symmetric or asymmetric. |

In addition to these properties, haptic effect patterns may be introduced. These haptic effect patterns allow primitives (or cycles or burst) to be defined that can repeat in a parametric fashion. Table 5 details these newly defined types of haptic effect and a set of new parameters for the parametric representation.

**Table 5: List of new properties added to define haptic effect patterns**

| **Prope rty** | **Description** |
|---|---|
| **Effect type** | New possible value: |
| | - Pattern: Effect containing structure signal data defined through a set of keyframes. The data is defined for one cycle that repeats. |
| **Numb er of pulse s** | Number of pulses in one primitive |
| **Cycle Offset** | Time between two cycles |
| **Numb er of cycle s** | Number of cycles in the pattern effect |

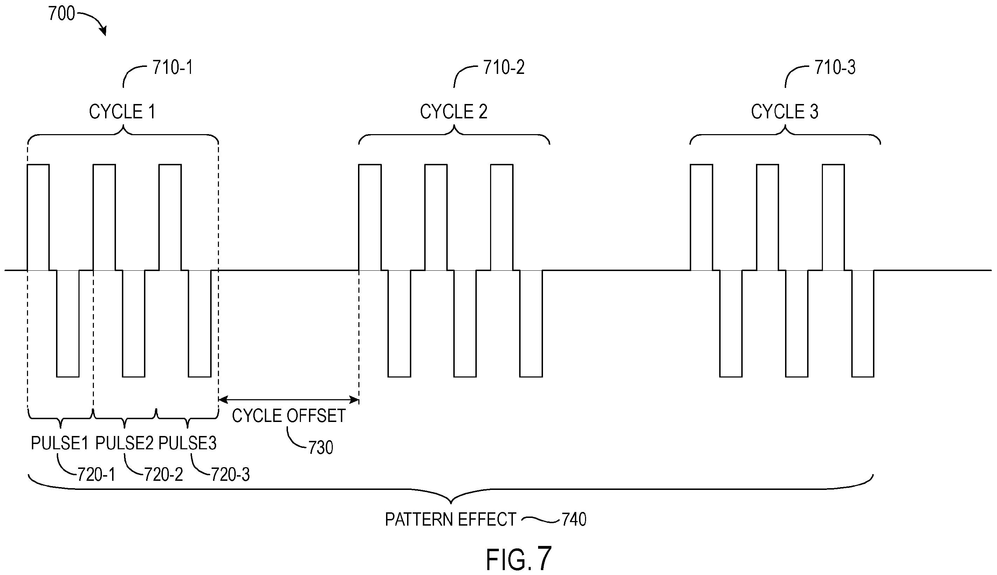

FIG. 7 illustrates an example signal 700 defined with a haptic pattern containing three cycles of three pulses. Signal 700 is a parametric representation of a haptic pattern. Signal 700 is defined with a haptic pattern of three cycles 710.1, 710.2, 710.3 each containing three pulses 720.1, 720.2, 720.3 with the three cycles 7101, 710.2, 710.3 producing a pattern effect 740. In the embodiment described herein efficiency is achieved over existing formats. For instance, for a one second signal of signal 700 type with cycles repeated at a 100Hz frequency requires the present format to define 100 times more effects than the embodiment described herein.

Similar parametric models may be defined using parameters such as the cycle frequency or cycle period instead of the offset. Cycle duration and effect duration properties may be defined instead of the number of pulses and cycles.

In the context of ISO/IEC 23090-31, the embodiment described herein may be integrated as detailed in Table 6 and Table 7.

**Table 6: Extension of the MPEG haptic format with parametric model**

| **Property** | **Description** |
|---|---|
| **Id** | Unique ID of the effect. This property is required for effects defined at the perception level in the library and for reference effects. For reference effects, this property corresponds to the ID of the library effect being referenced. The ID is unique among all effect IDs in this haptic experience. |
| **Effect type** | Type of haptic effect. Possible values are: |
| | - Basis: Effect containing signal data defined through a set of keyframes. |
| | - Composite: Effect composed of a set of other effects defined in the composition property. This type of effect does not directly contain keyframes. |
| | - Reference: Effect referencing an effect in the library. This type of effect is used at the band level to reference effects defined at the perception level in the effect library using a unique ID. |
| | - Pattern: Effect containing structure signal data defined through a set of keyframes. The data is defined for one cycle that repeats. |
| **Semantic keywords** | Semantic keywords of the haptic effect. It is an optional field that may be added to an effect. |
| **Position** | Indicates the temporal or spatial position of the effect. The value 0 corresponds to the starting position of the experience. The default unit for temporal haptic feedback will be milliseconds while it will be millimetres for spatial haptic feedback. Temporal or spatial is defined by the perceptionModality. |
| **Phase** | Indicates the phase of the effect in radian in the range [0,2π]. This value is used only for vectorial wave bands and is ignored in effects stored inside a band of a different type. |
| **Base signal** | This property is only used for vectorial wave bands. It defines the type of waveform signal to be used by the synthesizer. Possible values are: |
| | - Sine |
| | - Square |
| | - Triangle |
| | - Sawtooth up |
| | - Sawtooth down |
| **composition** | This property can only be used with composite effects. It contains a sub-list of effects. |
| **keyframes** | List of keyframes as defined in ISO/IEC 23090-31.The keyframes list is only used for basis effects. |
| **Wavelet stream** | Encoded wavelet stream. |
| **bipolar** | This property is only used for vectorial wave bands. It indicates if the signal is monopolar (monophasic) or bipolar (biphasic). |
| **Symmetric** | This property is only used for vectorial wave bands with bipolar effect. It indicates if the signal is symmetric or asymmetric. |
| **Number of pulses** | Number of pulses in one cycle of a pattern effect |
| **Cycle Offset** | Time between two cycles of a pattern effect |
| **Number of cycles** | Number of cycles in a pattern effect |

**Table 7: List of properties of a keyframe**

| **Property** | **Description** |
|---|---|
| **amplitude modulation** | Amplitude of the keyframe. For vibrotactile signals, a negative vibration refers to an opposite polarity of the modulated signal. |
| **Frequency modulation** | Relative frequency of the keyframe. |
| **Relative position** | Relative position of the keyframe. |
| **Pulse width** | This property is only used for vectorial wave bands. Width of the pulse |
| **Interphase delay** | This property is only used for vectorial wave bands. It indicates if the delay between two pulse phases |

The implementation of the embodiments described here can be varied. In the context of the MPEG haptic standard, the embodiments may be added to the HJIF format or may be encoded in the MIHS binary compressed data. Here for the sake of clarity, the implementation for the HJIF readable format is provided.

In Table 8 and Table 9 the implementation of the embodiment described above is provided with the extension of the parametric model is added at the effect and keyframe levels.

**Table 8: Description of the MPEG_haptics.effect including affective data**

| **Property** | **Type** | **Default** | **Description** | **Requir ed** |
|---|---|---|---|---|
| **id** | integer | N/A | ID of an effect. For any effect from the effect library and any "Reference" effect, the value shall be defined and be equal to or greater than zero. For all other effects the property shall not be defined. For any non-"Reference" effect from the effect library , the value shall be unique in the perception. | Conditi onal |
| **effect_type** | enum< string> | N/A | Indicates the type of haptic effect. Effect-type value equals one of: "Basis", "Composite", "Reference" and "Pattern", corresponding to the description in ISO/IEC 23090-31 | Yes |
| **semantic_k eywords** | string | N/A | Semantic keywords included with the effect. | No |
| **position** | integer | N/A | Indicates the temporal or spatial position of the effect according to the perception modalities in Table 4. In the case of temporal, position/timescale is the temporal position in seconds. The value shall be equal to or greater than zero. In a band where band_type = "WaveletWave", this property shall only exist for the first effect (and no other). For any other band type, the property is required. | Conditi onal |
| **phase** | number | 0 | Phase of the effect for Transient and Vectorial bands. The value should be in the range [0,2π]. | No |
| **base**_ **signal** | enum< string> | Sine | Indicates the type of the waveform signal for transient and vectorial wave bands. Possible values are: | No |
| | | | - "Sine" | |
| | | | - "Square" | |
| | | | - "Triangle" | |
| | | | - "SawToothUp" | |
| | | | - "SawToothDow n" | |
| **compositio n** | array< MPEG - haptics. effect> | N/A | This attribute can only be used with composite effects. It contains a list of effects. This type of effect does not directly contain keyframes. | No |
| **keyframes** | array< MPEG - haptics. keyfra me> | N/A | List of MPEG_haptics.key frames as defined in ISO/IEC 23090-31. This property is required for basis and pattern effects. If the keyframes array is empty, the effect does not contain haptic data. This property shall not exist when band_type="Wavel etWave". | No |
| **wavelet_str eam** | string | N/A | Base64 encoding with most significant bit first (conformant to RFC 4648) of the encoded wavelet stream. This property shall exist only when band_type="Wavel etWave". The decoding process is described in ISO/IEC 23090-31 | Conditi onal |
| **bipolar** | boolea n | N/A | This property is only used for vectorial wave bands. It indicates if the signal is monopolar (monophasic) or bipolar (biphasic). If true, the signal is bipolar, otherwise the signal is monopolar. | No |
| **symmetric** | boolea n | N/A | This property is only used for vectorial wave bands with bipolar effect. It indicates if the signal is symmetric or asymmetric. If true, the signal is symmetric, otherwise the signal is asymmetric. | No |
| **pulse_num ber** | integer | N/A | Number of pulses in one cycle of a pattern effect | No |
| **cycle_offse t** | integer | N/A | Time in ticks between two cycles of a pattern effect. | No |
| **cycle_num ber** | integer | N/A | Number of cycles in a pattern effect | No |

**Table 9 - Description of the MPEG_haptics.keyframe object**

| **Property** | **Type** | **Defa ult** | **Description** | **Requir ed** |
|---|---|---|---|---|
| **amplitude_ modulation** | num ber | N/A | Amplitude of the keyframe. The value shall be in the range [-1,1]. | No |
| **frequency_ modulation** | num ber | N/A | Relative frequency of the keyframe. The value shall be in the range [0,10000] | No |
| **relative_ position** | integ er | N/A | Relative position of the keyframe. In the case of temporal, relative_position/time scale is the relative position in seconds. The value shall be equal to or greater than zero. | No |
| **pulse_width** | integ er | N/A | This property is only used for vectorial wave bands. Width of the pulse in ticks | No |
| **interphase_d elay** | integ er | N/A | This property is only used for vectorial wave bands. It indicates if the delay between two pulse phases | No |

An example of haptic file containing a single pattern effect is provided below. The effect contains 1000 cycles of 3 pulses. The same file with the current format may require the definition of 1000 effects each with a manually defined position in the previous scenario. Such effect would be memory inefficient and especially difficult to author or edit.

```
 {
  "version":"2023",
  "profile":"Main",
  "level":1,
  "date":"Mon Sep 16 15:15:33 2024\n",
  "description":" Example effect",
  "timescale":1000,
  "avatars":[
  
  ],
  "perceptions":[
   {
    "id":0,
    "avatar_id":0,
    "description": "Vibration effect",
    "perception_modality":"Vibrotactile",
    "unit_exponent":-3,
    "perception_unit_exponent":0,
    "reference_devices":[
  
    ],
    "effect_library":[
  
    ],
    "channels":[
     {
       "id":0,
       "description":"Channel 0",
       "gain":1.0,
       "mixing_coefficient":1,
       "body_part_mask":131072,
       "bands":[
        {
         "band_type":"VectorialWave",
         "lower_frequency_limit":0,
         "upper_frequency_limit":1000,
         "effects":[
           {
            "effect_type":"Pattern",
            "position" :0,
            "phase":0.0,
            "pulse_number":3,
            "cycle_offset":500,
            "cycle_number":1000,
            "base_signal":"Square",
            "bipolar" :true,
            "keyframes":[
             {
               "relative_position":0,
               "amplitude_modulation":0.1,
               "frequency_modulation":200
               "pulse_width":50
             }
            ],
           }
         ]
        }
       ]
     }
    ]
   }
 ],
 "syncs":[
   {
    "timestamp":0,
    "timescale":1000
   }
 ]
 }
```

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to MPEG-I, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for encoding parametric haptic data, the method comprising:
providing a property designating an effect of a parametric model including a type of signal;
providing in the effect of a parametric model a designation of a symmetry of the signal;
indicating properties in the parametric model to define a pulse including pulse width and interphase delay; and
providing properties in a plurality of haptic effect patterns including effect type, number of pulses, cycle offset, and number of cycles.

2. The method of claim 1, wherein the property is monopolar or bipolar.

3. The method of claim 1, wherein the designation of the symmetry is symmetric or asymmetric.

4. The method of claim 1, wherein the interphase delay indicates if the signal is symmetric or asymmetric.

5. The method of claim 1, wherein the effect type includes a value indicating the pattern via a set of keyframes for one cycle that repeats.

6. The method of claim 1, wherein the number of pulses indicates the number of pulses in one primitive.

7. The method of claim 1, wherein the cycle offset indicates a time between two cycles.

8. The method of claim 1, wherein the number of cycles indicates the number of cycles in the pattern effect.

9. A codec for encoding parametric haptic data comprising:
a haptic synthesizer configured to:
provide a property designating an effect of a parametric model including a type of signal;
provide in the effect of a parametric model a designation of a symmetry of the signal;
indicate properties in the parametric model to define a pulse including pulse width and interphase delay; and
provide properties in a plurality of haptic effect patterns including effect type, number of pulses, cycle offset, and number of cycles.

10. The codec of claim 9, wherein the property is monopolar or bipolar.

11. The codec of claim 9, wherein the designation of the symmetry is symmetric or asymmetric.

12. The codec of claim 9, wherein the interphase delay indicates if the signal is symmetric or asymmetric.

13. The codec of claim 9, wherein the effect type includes a value indicating the pattern via a set of keyframes for one cycle that repeats.

14. The codec of claim 9, wherein the number of pulses indicates the number of pulses in one primitive.

15. The codec of claim 9, wherein the cycle offset indicates a time between two cycles.
